# EUROPEAN PATENT SPECIFICATION

(11) **EP 3 954 841 B1**
(45) Date of publication and mention of the grant of the patent: **24.12.2025**
(21) Application number: 21187141.3
(22) Date of filing: 22.07.2021
(51) Int. Cl.: E04C 2/26, E04B 2/48, B32B 5/02, B32B 7/08, B32B 7/12, B32B 9/02, B32B 9/00, B32B 3/08

(54) **A LAYERED COMPONENT**
GESCHICHTETE KOMPONENTE
COMPOSANT STRATIFIÉ

(30) Priority: 23.07.2020 GB 202011409
(43) Date of publication of application: 16.02.2022
(73) Proprietor: Laing O'Rourke Plc, Dartford, Kent DA2 6SN (GB)
(72) Inventor: THEOBOLD, BEN, DARTFORD, DA2 6SN (GB); BOYES, DOMINIC, DARTFORD, DA2 6SN (GB); BOWERMAN, HUGH, DARTFORD, DA2 6SN (GB)
(74) Representative: CMS Cameron McKenna Nabarro Olswang LLP

(56) References cited:
- US-A1- 2020 123 765
- US-B1- 8 966 845

## Description

The present disclosure relates to a layered component, in particular, a layered component for automated manufacturing of a panel of a module for a building, and a method of manufacturing a layered component.

### BACKGROUND

Recently, modular construction became a popular method of constructing buildings for its effectiveness of constructing a building with high quality within a more controlled environment. In building construction, the use of brick masonry is widely accepted as being the default external finish to a building. It is known that to provide similar perceived durability, solidity and aesthetic acceptability of using bricks, the modular construction emulates the look and feel of a brick finished building.

One way to emulate the brick construction is to deliver already watertight modules and bricks separately to the construction site and build up the brick walls at the site. Although the bricks are not laid to achieve water tightness of the building, a skilled individual is required to ensure that the bricks are laid properly. Scaffolding is also required. This emulation is generally used on buildings below 6 storeys high

Another way to emulate the brick construction is to manually pre-clad modules of low-rise buildings with brick slips.

US 8,966,845 B1 describes that a product comprises a composite panel comprising a foam insulating panel having a first primary surface and an opposite second primary surface, and a first layer of a polymeric elastomeric material on the first primary surface such that at least a portion of a first layer of reinforcing material is at least partially embed in the polymeric elastomeric material. The composite panel also comprises a fastener for attaching the composite panel to a framing structure, wherein the fastener comprises a washer and wherein at least a portion of the first layer of a polymeric elastomeric material and the first layer of reinforcing material are disposed between the washer and the first primary surface. A method of making and using the composite panel is also described.

The examples described herein are not limited to examples which solve problems mentioned in this background section.

### SUMMARY

The invention is set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology comprises a layered component for automated manufacture of a panel of a module for a building comprising a plurality of modules. The layered component comprising: a substrate arranged to be mounted on a supporting structure of a module of the building; an outer layer comprising one or more finishes; an adhesive layer disposed between the substrate and the outer layer and holding the substrate and the outer layer together; a first bond region between the adhesive layer and the substrate; a second bond region between the adhesive layer and the outer layer; a mesh disposed within the adhesive layer; and an attaching assembly passing through the mesh and arranged to mechanically secure the layered component to the supporting structure. The attaching assembly is configured such that in use any brittle failure of the bond regions occurs in the first bond region prior to the second bond region, wherein the attaching assembly comprises: a fastening means (209) which comprises a head (210) engageable with the mesh (208) and an elongated portion which extends from the head, such that in use the head (210) is disposed within the adhesive layer (203, 207) and anchors the mesh (208) on one side of the mesh and the elongated portion extends through the substrate (205) to engage with the supporting structure (206) so that the fastening means (209) anchors the layered component (200; 300; 400; 500; 600) to the supporting structure (206); and a spacer (312) so that, in use, the mesh (208) is placed in a predetermined position within the adhesive layer (203, 207) and the spacer (312) is arranged to enable the fastening means (209) to be tightened, clamping the substrate (205) to the supporting structure (206) whilst the adhesive layer (203, 207) is in an uncured state.

In this way, if there is an occurrence of brittle failure in the layered component, it is controlled such that the brittle failure occurs in the first bond region before the second bond region. The mesh and the attaching assembly reinforce the layered component.

In some preferred example embodiments, the attaching assembly is ductile, and the mesh is ductile. In this way, the layered component is provided with more resilience to withstand the environmental factor applied on the building. For example, if the building is shaken the breakage within the layered component is controlled such that brittle failure occurs prior to ductile failure. The layered component comprises a continuity of a ductile structural system, including but not limited to, the mesh and the attaching assembly, bypassing any brittle elements. The brittle element may be a substrate.

According to the invention, the attaching assembly comprises a fastening means. The fastening means comprises a head engageable with the mesh and an elongated portion which extends from the head, such that in use the head is disposed within the adhesive layer and anchors the mesh on one side of the mesh and the elongated portion extends through the substrate to engage with the supporting structure so that the fastening means anchors the layered component to the supporting structure.

In this way, the fastening means is securely anchored within the adhesive layer on one end and securely fixes the layered component to the supporting structure. The fastening means engages with the mesh within the adhesive layer and is able to pull the layered component towards the supporting structure to be fixed on the supporting structure.

In some preferred example embodiments, the head of the fastening means has a diameter at least twice that of one or more holes formed in the mesh. In this way, the fastening means is securely anchored on the mesh and effectively pulls the layered component towards the supporting structure. This prevents the fastening means from being dislodged and disengaged unwittingly from the mesh.

In some preferred example embodiments, the attaching assembly comprises: a washer engageable with the mesh and the fastening means such that in use the washer is placed between the head of the fastening means and the mesh to distribute force applied by the attaching assembly and to engage wider region of the mesh. The washer has a diameter which is greater than a diameter of one or more holes formed in the mesh. In some examples, the washer is shaped to prevent air being trapped underneath the washer.

In this way, the force being applied by the attaching assembly on the mesh and consequently on the layered component is evenly distributed. This prevents the head of the fastening means being disengaged from the mesh by passing through a hole formed in the mesh when pulled or when there is external forced applied to the layered component. The external force can be applied due to building movement affected by an environmental factor such as wind, seismic shifts, temperature difference and loads.

In some preferred example embodiments, the washer is shaped to prevent air being trapped underneath the washer. In this way, the adhesive of the adhesive layer can be spread along the surface of the washer and cured creating firmer bond regions.

According to the invention, the attaching assembly comprises a spacer so that, in use, the mesh is placed in a predetermined position within the adhesive layer. The spacer is arranged to enable the fastening means to be tightened, clamping the substrate to the supporting structure whilst the adhesive layer is in an uncured state.

In this way, the mesh is prevented from unnecessary deformation, ensuring the integrity of the layered component to be consistent. The adhesive layer will remain substantially the same thickness, because the amount of the adhesive between the mesh and the substrate can remain consistent. This also ensures the same thickness of the adhesive layer throughout the layered component.

In some preferred example embodiments, the spacer is integral to the washer or the fastening means. In some preferred example embodiments, the spacer and the washer are integral to the fastening means. In this way, the design of the spacer, washer and the fastening means may vary depending on the manufacturing capability and needs. The integrated spacer, washer and fastening means have fewer overall parts so it is more robust. The integrated spacer, washer and fastening means are also quicker to install. The layered component may be made with the spacer, washer and fastening means in various shapes and designs such that most cost-effective shape and design can be selected.

In some preferred example embodiments, the washer comprises one or more holes to facilitate distribution of adhesive of the adhesive layer and to facilitate air to escape providing a greater continuity of the adhesive layer. In this way, the washer facilitates the bonding of the adhesive layer. This ensures that the bonding is effectively formed and in a uniform manner.

In some preferred example embodiments, the mesh is disposed at a predetermined distance away from a surface of the substrate and embedded within the adhesive layer. In some preferred example embodiments, the predetermined distance is between a quarter of an overall thickness of the adhesive layer and 2/5 of an overall thickness of the adhesive layer. In this way, the mesh is prevented from unnecessary deformation. This ensures that the layered component comprises the adhesive layer with relatively consistent thickness ensuring the integrity of the layered component. The adhesive layer remains at substantially the same thickness. The adhesive of the adhesive layer is evenly distributed throughout the layered component. This even distribution of the adhesive results in a consistent bond and ensures the layers are consistent. The consistent layers ensure that the finished surface of the layered component is flat.

In some preferred example embodiments, the layered component comprises comprising a load bearer which is arranged to be disposed between the substrate and the supporting structure such that when in use the fastening means extends through the substrate to the load bearer. The load bearer is ductile. The supporting structure comprises the load bearer. In this way, the loads of the layered component can be transferred to the supporting structure, and eventually, when in use, to the main structure of the building. The load bearer ensures that the layered component has a further continuity of a ductile structural system, bypassing any brittle elements. The brittle elements may be the substrate.

In some preferred example embodiments, wherein the washer is plastic, metal or reinforced composites. In some examples, the washer is of reinforced plastics such as fibre enforced plastics.

In some preferred example embodiments, the finishes comprise one or more of: brick slips, tiles, stone, render, and ceramics. The layered structure is capable of providing different finishes such that it can adapt to a requirement of various buildings. For example, certain finishes can be used for the panels as internal or external walls of the building. In some examples, the finishes comprise a different combination of brick slips, tiles, stone, render and ceramics.

Another aspect of the disclosed technology comprises a composite panel comprising the layered component as described in any one of the preceding paragraphs.

Another aspect of the disclosed technology comprises a method of manufacturing a layered component. The method comprises placing a substrate on a supporting structure; applying a first adhesive layer on the substrate in a substantially uniform thickness and providing a first bond region between the first adhesive layer and the substrate; placing a mesh on the first adhesive layer; mechanically securing the mesh to the supporting structure by inserting an attaching assembly through the mesh, the first adhesive layer and the substrate into the supporting structure; applying a second adhesive layer in a substantially uniform thickness to the mesh and providing a second bond region between the second adhesive layer and an outer layer; and placing one or more finishes on the second adhesive layer to form the outer layer, wherein the attaching assembly is configured such that in use any brittle failure of the bond regions occurs in the first bond region prior to the second bond region, wherein the attaching assembly comprises: a fastening means (209) which comprises a head (210) engageable with the mesh (208) and an elongated portion which extends from the head, such that in use the head (210) is disposed within the adhesive layer (203, 207) and anchors the mesh (208) on one side of the mesh and the elongated portion extends through the substrate (205) to engage with the supporting structure (206) so that the fastening means (209) anchors the layered component (200; 300; 400; 500; 600) to the supporting structure (206); and a spacer (312) so that, in use, the mesh (208) is placed in a predetermined position within the adhesive layer (203, 207) and the spacer (312) is arranged to enable the fastening means (209) to be tightened, clamping the substrate (205) to the supporting structure (206) whilst the adhesive layer (203, 207) is in an uncured state. The layered component is manufactured automatically or manually.

In this way, reinforced layered components are manufactured in an efficient manner so that if there is an occurrence of brittle failure in the layered component, it is controlled such that the brittle failure occurs in the first bond region before the second bond region.

In some preferred example embodiments, the method comprises applying a plurality of render finishes. In this way, different façades are presented for different purposes and requirements of the wall.

In some preferred example embodiments, when inserting the attaching assembly, the method further comprises pulling the mesh, by the attaching assembly, towards the supporting structure before the adhesive starts to harden. In this way, the integrity of the layered component remains consistent. The adhesive layer remains substantially the same thickness. The layered component is attached onto the supporting structure whilst providing an effective manner to create firmer bonding regions.

In some preferred example embodiments, the finishes comprise one or more discrete elements and placing the one or more discrete elements on the second adhesive layer comprises: determining a feature of one or more of the discrete elements, wherein the feature comprises at least one of: a dimension, a colour, a shape or a design of the one or more discrete elements; storing the one or more of the discrete elements in batches according to the determined feature; assigning an edge of the one or more of the discrete elements as a datum such that it determines the orientation of the one or more of the discrete elements; placing the one or more of the discrete elements such that the datum edge is positioned according to a design intent. In this way, the discrete elements can be sorted, stored and placed in an effective way, depending on the design intent.

In some preferred example embodiments, the placing the one or more discrete elements on the second adhesive layer comprises: pushing the one or more of the discrete elements into an adhesive such that outer surfaces of the one or more of the discrete elements are arranged to lie substantially in plane with the surface of the other discrete elements forming the outer layer. In this way, the layered component can have a substantially flat façade.

In some preferred example embodiments, the datum edge of the one or more of the discrete elements are aligned in a substantially straight line.

In some preferred example embodiments, wherein the datum edge of a first discrete element is positioned to create a substantially straight line with a second discrete element, such that: if the first discrete element has the datum edge that is concaved then the straight line is defined by connecting points substantially 10% of the length of the datum edge in from each end of the first discrete element and the second discrete element; and if the first discrete element has the datum edge that is convex then the straight line is defined by a mid-side tangent line of the first discrete element and the second discrete element.

In some preferred example embodiments, the one or more discrete elements comprise one or more of: brick slips, tiles, stone, render, and ceramics. In some preferred example embodiments, the datum edge is a long edge of the one or more discrete elements. In some preferred example embodiments, the datum edge is a long edge if the one or more discrete elements comprise brick slips.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 illustrates a schematic cross-sectional diagram of a prior art brick slip structure;
FIG. 2 illustrates a schematic cross-sectional diagram of a layered component;
FIG. 3A is a schematic cross-sectional diagram of a layered component with an example of the attaching assembly;
FIG. 3B is a schematic diagram showing of an embodiment of a washer;
FIG. 4 is a schematic cross-sectional diagram of a layered component with an example of the attaching assembly;
FIG. 5 is a schematic cross-sectional diagram of a layered component with an example of the attaching assembly;
FIG. 6 is a schematic cross-sectional diagram of a layered component showing an example of a load bearer;
FIG. 7 is a schematic diagram of an example of manufacturing of the layered component;
FIG. 8 is a flow diagram of a method of manufacturing a layered component;
FIG. 9 is a schematic diagram of placing of one or more discrete elements; and
FIG. 10 shows an example of a panel of a module for a building comprising a plurality of modules.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals with different prefixes have been used to indicate the corresponding features throughout the figures, where appropriate, to indicate similar features. The figures are not to the actual size.

### DETAILED DESCRIPTION

It is important that emulations of brick constructions ensure that the brick and the brick slip are securely placed so that they are not easily disturbed and fall off. In particular, when using brick slips, the brick slips are to be securely attached to the modules. Where brick slips are used on buildings with increased height, it is more challenging to ensure good performance from the brick slips. In such circumstances, brick slips are more exposed to significant environmental factors such as weather. Also, it is more difficult to inspect the condition of the brick slips and to carry out maintenance. Therefore, the durability of brick slips and attachment to modules is more critical for buildings of increased height. Conventional methods of relying on using adhesive to maintain brick slips on modules is not reliable as the adhesive can be easily corrupted under the forever changing weather condition and/or when not maintained properly.

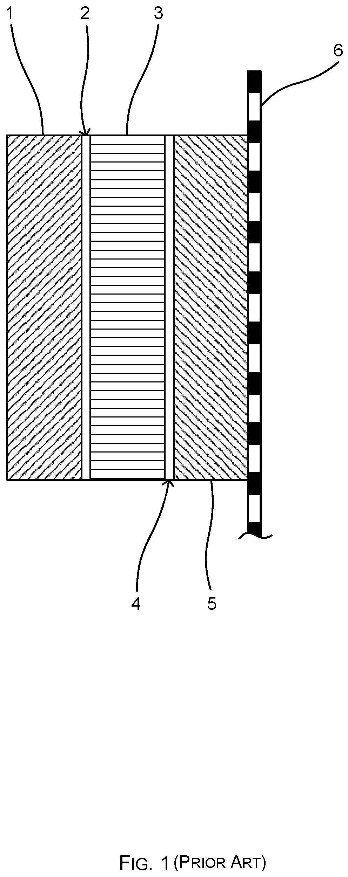

FIG 1 shows a diagram of a prior art structure. The structure of FIG 1, comprises a substrate 5 arranged to be mounted on a supporting structure 6; an outer layer 1 comprising one or more finishes; an adhesive layer 3 disposed between the substrate 5 and the outer layer 1 and holding the substrate 5 and the outer layer 1 together. The structure of FIG 1, further comprises a first bond region 4 between the adhesive layer 3 and the substrate 5 and a second bond region 2 between the adhesive layer 3 and the outer layer 1. The structure of figure 1 can be mounted to form a wall of a building. When it is installed as a wall on a building, the structure of FIG 1 is exposed to environmental factors. The environmental factors comprise weather conditions, wind pressure, temperatures, seismic activities and loading. A failure in the structure of FIG 1 can occur when there is a movement of the building due to strong wind, or when there are significant changes to temperature. A tall building has more exposure to such factors because of its height and larger area of the building being exposed to environmental factors. It is also very difficult to maintain such buildings. These kinds of exposures, the difficulties of maintenance and sheer quantity of the prior art structures (i.e. figure 1) being mounted to form the wall increase the risk of a failure. To mitigate the net risk of an injury (e.g., due to a failure) or financial loss (e.g. due to expensive repairs) a more reliable system is needed.

If there is a failure in the structure of FIG 1, the assumption is that it would be in the first and second bond regions 4, 2 because they hold the structure together. The first and second bond regions 4, 2 also ensure that the structure is attached to the supporting structure 6. With the structure of FIG 1, the layers of the structure are attached directly to a substrate 5 that moves with time and under load. This results in differential strains between the adhesive layer 3 and the substrate 5, causing a local bond failure. A cracked concrete is such an example. In an example, the extent of the bond failure increases because of the continued movement of the building and being under load. Eventually some part of the structure will fall off. In such case the crack can continuously open and close until finally brick slips fall off.

It is found that in a majority of cases of the structure of FIG 1, if a failure occurs, it occurs at the first bond region 4, between the adhesive layer 3 and the substrate 5 not at the second bond region 2, between the adhesive layer 3 and the outer layer 1. This finding is unexpected as one would generally assume that the layer furthest from the supporting structure 6 would be weaker due to weathering attacking the outer layer first.

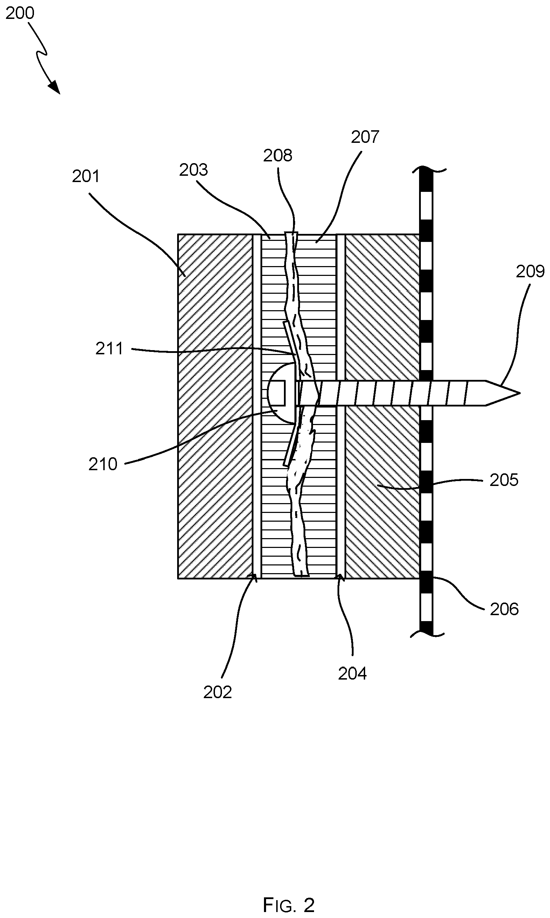

FIG. 2 is a diagram of an example of a layered component 200. Although described as a layered component for automated manufacture of a panel of a module, the layered component may be manufactured manually or automated. The layered component 200 is part of a panel. The panel is used for a module for a building, wherein the building comprises a plurality of modules. The layered component 200 comprises a substrate 205 arranged to be mounted on a supporting structure 206 of a module of the building.

The supporting structure 206 takes the load of the layered component 200. In some examples, the supporting structure 206 is a structural grid on which the substrate 205 is mounted. The supporting structure 206 comprises a plurality of vertical and/or horizontal sections that support the substrate 205 and receive any fixing means (such as attaching assembly). In some examples, the supporting structure 206 is metal. In some examples, additionally, or alternatively the supporting structure 206 is timber.

The layered component 200 comprises an outer layer 201 comprising one or more finishes. The finishes comprise one or more of discrete elements. In some examples, the one or more discrete elements comprise: brick slips, tiles, stone, render, enamelled metal and ceramics. The stone refers to any hard, solid, non-metallic mineral matter. For example, the stone comprises but not limited to rock, pebble, boulder and cobbles.

The layered component 200 comprises an adhesive layer 203, 207. In some examples, the adhesive layer comprises two parts 203, 207, a first adhesive part 203 and a second adhesive part 207. The first adhesive part 203 is substantially disposed on one side of the mesh 208 and the second adhesive part 207 is substantially disposed on another side of the mesh 208. The first and second adhesive parts 203, 207 bond together and becoming a single cured adhesive. In this application, the first and second adhesive parts are sometimes referred as the first and second adhesive layers. For brevity sometimes the adhesive layer may be labelled as 203 or 207 in the figures.

The layered component 200 comprises a first bond region 204 between the adhesive layer 207 and the substrate 205. The layered component comprises a second bond region 202 between the adhesive layer 203 and the outer layer 201.

The layered component 200 comprises a mesh 208 disposed within the adhesive layer. The mesh is ductile. In some examples, the mesh 208 is disposed at a predetermined distance away from a surface of the substrate 205 and embedded within the adhesive layer 203, 207. In some examples, the predetermined distance is between a quarter of an overall thickness of the adhesive layer 203, 207 and 2/5 of an overall thickness of the adhesive layer 203, 207.

The layered component 200 comprises an attaching assembly. The attaching assembly passes through the mesh 208 and is arranged to mechanically secure the layered component 200 to the supporting structure 206. The attaching assembly is configured such that in use any brittle failure of the bond regions occurs in the first bond region 204 prior to the second bond region 202. The attaching assembly is ductile.

The attaching assembly comprises a fastening means 209 which comprises a head 210 engageable with the mesh 208 and an elongated portion which extends from the head 210. In use, the head 210 is disposed within the adhesive layer 203, 207 and anchors the mesh 208 on one side of the mesh 208. In use, the elongated portion extends through the substrate 205 to engage with the supporting structure 206 so that the fastening means anchors the layered component 200 to the supporting structure 206. The attaching assembly is able to deform in a ductile manner. Thus, the attaching assembly provides further resistance to any movement of the layered component 200 relative to the building. When any brittle failure occurs at the first bond regions 204, the layered component 200 is still capable of being attached, via the ductile attaching assembly, to the supporting structure 206, and effectively to the building.

The head 210 of the fastening means has a diameter at least twice that of one or more holes formed in the mesh 208. This size ensures that the fastening means 209 can anchor the mesh 208 from one side of the mesh 208. The fastening means 209 can pull the mesh 208 toward the substrate 205 with ease. The fastening means 209 enables fixing of the layered component 200 to the supporting structure 206.

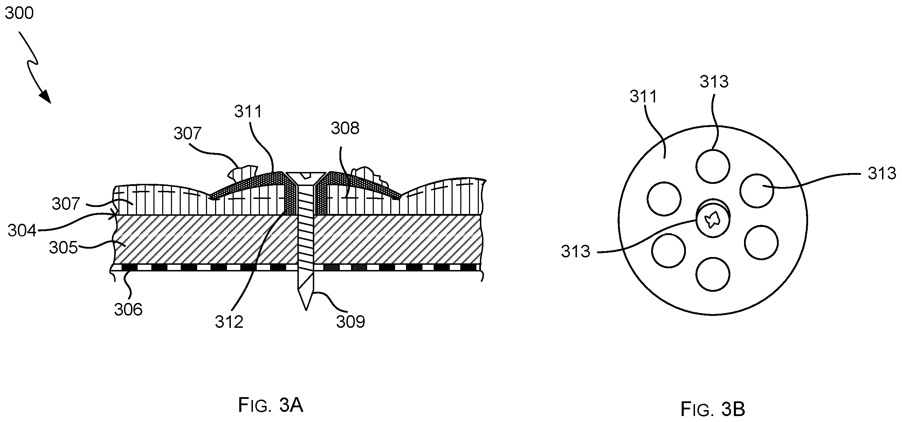

In some examples, the attaching assembly further comprises a washer 211 engageable with the mesh 208 and the fastening means 209. In use the washer 211 is placed between the head 210 of the fastening means 209 and the mesh 208 to distribute force applied by the attaching assembly and to engage wider region of the mesh 208. The washer 211 has a diameter which is greater than a diameter of one or more of holes formed in the mesh 208. FIG 3B. illustrates an example of a washer 311 with holes 313. The washer 211 aids in the attaching assembly being used to pull the mesh 208 toward the substrate 205 with ease. The washer 211 aids in enabling of fixing the layered component 200 to the supporting structure 206. In some examples, the washer 211 is shaped to prevent air being trapped underneath the washer.

FIGs 3A, 4 to 6 comprises all the features described in association with FIG 2. For brevity these features are not described in relation to FIGs 3A, 4 to 6. The same numbers with different prefixes have been used to indicate the corresponding features described in FIG 2. For example, the substrate 305 in FIG 3 corresponds with the substrate 205 of FIG 2. FIGs 3A, 4 to 6 illustrate different embodiments of the layered component.

FIG 3A illustrates an example of a layered component 300 comprising the attaching assembly which further comprises a washer 311 and a spacer 312. When in use, the spacer 312, allows the mesh 308 to be placed in a predetermined position within the adhesive layer. Only a part of the adhesive layer 307 is shown in FIG 3A. However, in a complete layered component 300 the first part of the adhesive layer would be applied on top of the layered component shown in FIG 3A to form the adhesive layer. The formed adhesive layer is a full adhesive layer comprising the first part of the adhesive layer and the second part of the adhesive layer. The spacer 312 is arranged to enable the fastening means 309 to be tightened and to clamp the substrate 305 to the supporting structure 306 whilst the adhesive layer is in an uncured state. In this example the spacer 312 is integral to the washer 311. Alternatively, in some examples, the spacer is separate entity to the washer 311 and the fastening means 309. The spacer 312 ensures that the mesh 308 is disposed at a predetermined distance away from a surface of the substrate 305 and embedded within the adhesive layer.

FIG 3B illustrates an example of a washer 311 having one or more holes 313. Labelling of some of these holes is omitted in FIG 3B. As illustrated in FIG 3A, the part of adhesive 307 which forms the adhesive layer passes through the holes 313 of the washer 311 to create the adhesive layer and provide for the second bonding region. The second adhesive part 307 provides for the first bonding region 304. The washer 311 comprises one or more holes to facilitate distribution of adhesive of the adhesive layer and to facilitate air to escape providing a greater continuity of the adhesive layer.

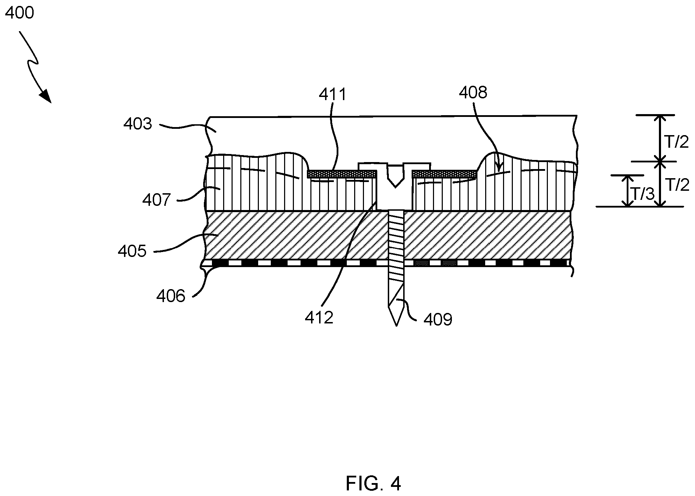

FIG 4 illustrates an example of the layered component 400 comprising the spacer 412 which is integral to the fastening means 409. This integration of the spacer 412 and the fastening means 409 results in less overall parts to manufacture and assemble. This provides more robust components because less parts are relatively movable. This provides for a quicker installation during manufacturing of the layered component 400. The washer 411 is a separate entity. The washer 411 includes one or more holes as illustrated in FIG 3B. In some examples, the washer 411 comprises one central hole. The FIG 4 illustrates that the mesh 408 being disposed at a predetermined distance away from a surface of the substrate 405 and embedded within the adhesive layer 403, 407. In some examples, the predetermined distance is a third of an overall thickness (T/3) of the adhesive layer 403, 407. Throughout the disclosure, including the figures, T refers to the overall thickness of the adhesive layer.

In some examples of the invention, the washer is plastic, metal or reinforced composites. In some examples, the plastic is reinforced plastic or fibre-reinforced plastic such as glass-reinforced plastic (GRP).

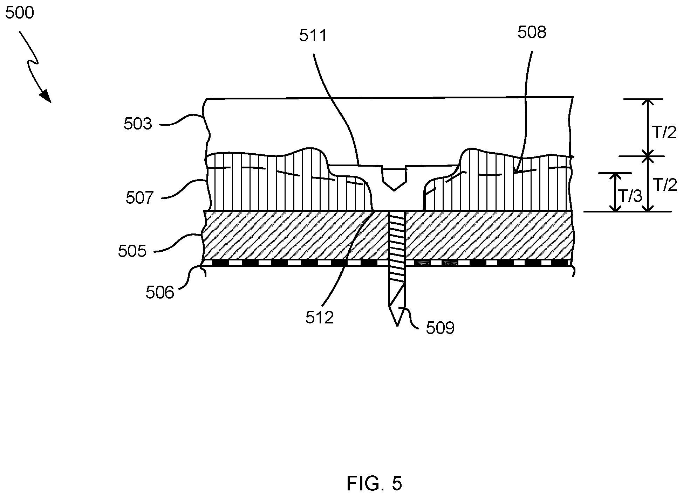

FIG 5 illustrates an example of the layered component 500 comprising the spacer 512 and the washer 511 which are integral to the fastening means 509. This integration of the spacer 512, the washer 511 and the fastening means 509 has advantage that it has few overall parts. It is easier to manufacture and assemble these parts. It also enables faster installation so that more fastening means 509 can be used per unit of time. This allows better overall fixing of the adhesive layer 503, 507 to the supporting structure 506. The washer 511 includes one or more holes as illustrated in FIG 3B. In some examples of the invention, the washer 511 is without these holes. If the washer 511 does not have holes, the shape of the washer's underside is designed to displace adhesive and air to the perimeter of the washer head. The FIG 5 illustrates that the mesh 508 being disposed at a predetermined distance away from a surface of the substrate 505 and embedded within the adhesive layer 503, 507. In some examples, the predetermined distance is a third of an overall thickness (T/3) of the adhesive layer 503, 507.

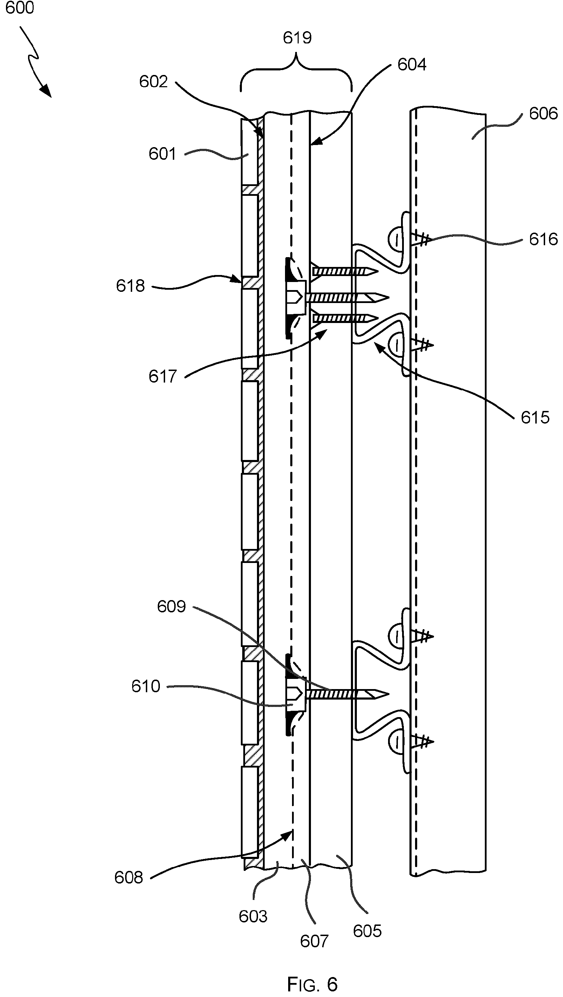

FIG. 6 shows an example of the layered component 600 comprising a load bearer 615. The load bearer 615 is arranged to be disposed between the substrate 605 and the supporting structure 606. When in use the fastening means 609 extends through the substrate 605 to the load bearer 615. The supporting structure 606 comprises the load bearer 615. The supporting structure 606 and the load bearer 615 take the load of the layered component 600. In some examples of the invention, the outer layer 601 of the layered component 600 comprises mortar 618. The mortar 618 fills the gap between the one or more of discrete elements. In some examples, the layered component 600 forms a composite panel 619. The composite panel 619 has high in-plane stiffness.

The load bearer 615 is disposed where there is high stress and strain between the adhesive layer 607 and substrate 605. This design of the supporting structure 606 and substrate 605 minimises stress and strains between the adhesive layer 607 and substrate 605, making the layered component 600 more robust and resistant to failure.

In some examples, the load bearer 615 has a profile of a top hat. This profile is designed to support the vertical weight of the panel 619 with a minimum deformation. The load bearer 615 provides the layered component 600 to deform significantly when high in-plane shear loads are applied between panel 619 and supporting structure 606. The shape of the load bearer 615 may vary depending on the requirement of the layered component 600, design intent and/or manufacturing facilities.

The load bearer 615 comprises one or more fixing means. For example, the one or more fixing means include but is not limited to screws 616, 617. Using one or more of first fixing means 616 the load bearer 615 is secured to the supporting structure 606. Using one or more of second fixing means 617 the load bearer 615 the layered components 600 is secured to the load bearer 615. In some examples, the one or more first fixing means and second fixing means 617 are the same type. For example, both the first and second fixing means is a screw. In some examples, the length of the second fixing means 617 is longer relative to the first fixing means 616. This is to cater for the thickness of the substrate 605 of the layered component 600. In this example, the fastening means 609 comprises a head 610 engageable with the mesh 608 and an elongated portion which extends from the head 610. In use, the head 610 is disposed within the adhesive layer 603, 607 and anchors the mesh 608 on one side of the mesh 608. In use, the elongated portion extends through the substrate 605 to engage with the load bearer 615 so that the fastening means 609 anchors the layered component 600 to the load bearer 615. The load bearer 615 is attachable to the supporting structure 606. The attaching assembly is able to deform in a ductile manner. Also, the load bearer 615 provides further ductile resistance. The attaching assembly provides further resistance to any movement of the layered component 600 relative to the building. When any brittle failure occurs at the first bond regions 604, the layered component 600 is still capable of being attached, via the ductile attaching assembly, to the supporting structure 606, and effectively to the building.

In some examples, a composite panel 619 comprises the layered component 600. This composite panel 619 forms a module for a building.

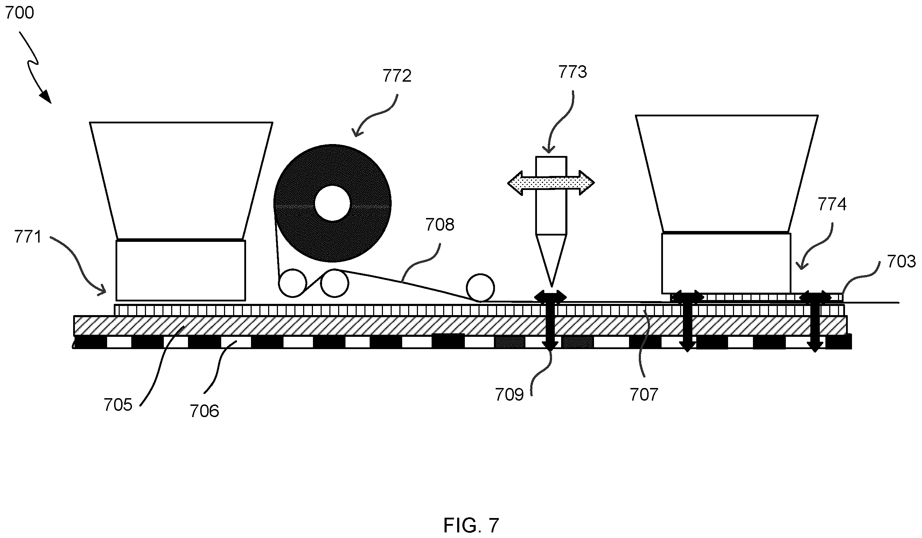

FIG 7 shows an example of an apparatus 700 that manufactures the layered component. The apparatus 700 places a substrate 705 on a supporting structure 706. The apparatus 700 assembles a substrate structure by mounting the substrate 705 on a supporting structure 706. At 771, a layer of basecoat material is applied on the substrate 705. This substrate 705 is a part of the substrate structure that includes the supporting structure 706. The basecoat material is a first layer of adhesive 707. The application of the first adhesive layer 707 is controlled so that it is applied in uniform thickness. At 772, a mesh 708 is embedded. The roll of mesh is prepared and as the substrate structure with the application of the first adhesive layer 707 moves along the production line the mesh 708 is unrolled and placed on top of the first adhesive layer 707. At 773, an attaching assembly is inserted. A fastening means 709 is illustrated in FIG 7. The attaching assembly is inserted through from the mesh 708 to the substrate structure. The attaching assembly secures the assembled layers to the supporting structure 706. In some examples, the supporting structure 706 comprises wood or metal. At 773, the attaching assembly anchors the layers assembled so far into the wood or metal part of the supporting structure 706. At 774, a second layer of adhesive 703 is applied. The application of the second adhesive layer 703 is controlled so that it is applied in uniform thickness. Although not shown, at the next step, one or more discrete elements are placed on top of the second adhesive layer 703. These one or more discrete elements form a desired pattern to the required standards. Then although not shown, in some examples, render finishes is applied on the one or more discrete elements. When applied the first and second adhesive layers 707, 703 merges to form a single adhesive layer.

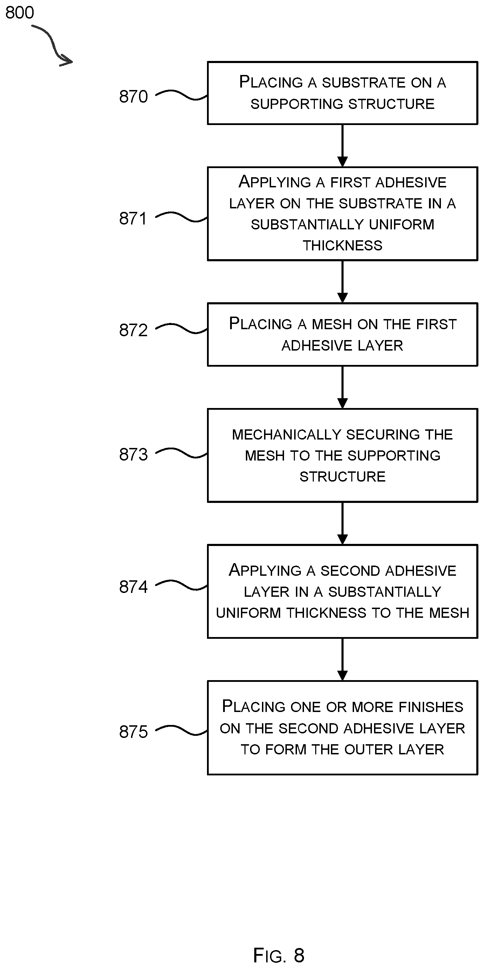

FIG 8 shows a flow diagram of a method of manufacturing a layered component. The method 800 comprises placing a substrate on a supporting structure at 870. At 871, apply a first adhesive layer on the substrate in a substantially uniform thickness. This provides a first bond region between the first adhesive layer and the substrate. At 872, place a mesh on the first adhesive layer. At 873, mechanically secure the mesh to the supporting structure and insert an attaching assembly. The attaching assembly is inserted through the mesh, the first adhesive layer and the substrate into the supporting structure. At 874, apply a second adhesive layer in a substantially uniform thickness to the mesh. This provides a second bond region between the second adhesive layer and an outer layer. At 875, place one or more finishes on the second adhesive layer to form the outer layer. In use, the attaching assembly is configured such that any brittle failure of the bond regions occurs in the first bond region prior to the second bond region of the layered component manufactured by the method described in FIG. 8. In some examples, additionally or alternatively, the method 800 further comprises applying a plurality of render finishes.

In some examples, when inserting the attaching assembly, the method further comprises pulling the mesh, by the attaching assembly, towards the supporting structure before the adhesive starts to harden.

In some examples, additionally or alternatively, the finishes comprise one or more discrete elements and the placing of the one or more discrete elements on the second adhesive layer comprises: determining a feature of one or more of the discrete elements; storing the one or more of the discrete elements in batches according to the determined feature; assigning an edge of the one or more of the discrete elements as a datum such that it determines the orientation of the one or more of the discrete elements; and placing the one or more of the discrete elements such that the datum edge is positioned according to a design intent. The feature of one or more of the discrete elements comprises at least one of: a dimension, a colour, a shape or a design of the one or more discrete elements.

In some examples, the placing the one or more discrete elements on the second adhesive layer comprises pushing the one or more of the discrete elements into an adhesive. By pushing the one or more of the discrete elements into an adhesive, outer surfaces of the one or more of the discrete elements are arranged to lie substantially in plane with the surface of the other discrete elements forming the outer layer. In some examples, pushing the one or more of the discrete elements into an adhesive such that outer surfaces of the one or more of the discrete elements are arranged to lie within substantially a plane of +/-0.5 mm difference.

In some examples, the datum edge of the one or more of the discrete elements are aligned in substantially a straight line.

In some examples, the datum edge of a first discrete element is positioned to create a substantially straight line with a second discrete element. If the first discrete element has a datum edge that is concave then the straight line is defined by connecting points substantially 10% of the length of the datum edge in from each end of the first discrete element and the second discrete element. If the first discrete element has the datum edge that is convex then the straight line is defined by a mid-side tangent line of the first discrete element and the second discrete element. In some examples, if the first discrete element has the datum edge that is convex, the straight line is defined by a mid-side tangent line of the first discrete element and the second discrete element aligned with substantially +/-1 mm difference of the mid-side straight line.

The one or more discrete elements comprise one or more of: brick slips, tiles, stone, render, and ceramics. In some examples, the datum edge is a long edge of the one or more discrete elements.

If the one or more discrete elements comprises brick slips, the datum edge is a long edge of the brick slips.

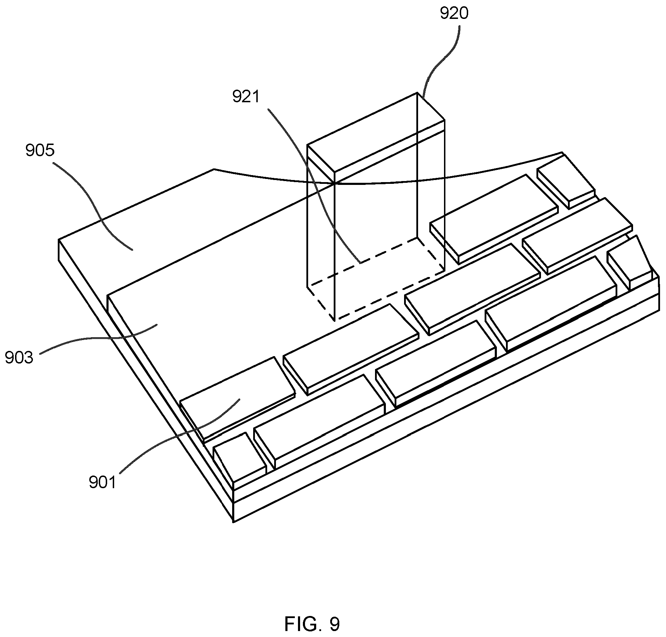

FIG 9 shows a schematic diagram of placing one or more discrete elements 920 on top of the adhesive layer 903 which has been applied to the substrate 905. This adhesive layer although labelled as 903 is the single adhesive layer formed by merging the first and second adhesive layers described throughout this application. A discrete element 920 is placed at a position 921 in accordance with design intent. The design intent is programmed by a user of the manufacturing system and/or an engineer. The design intent will follow required standards.

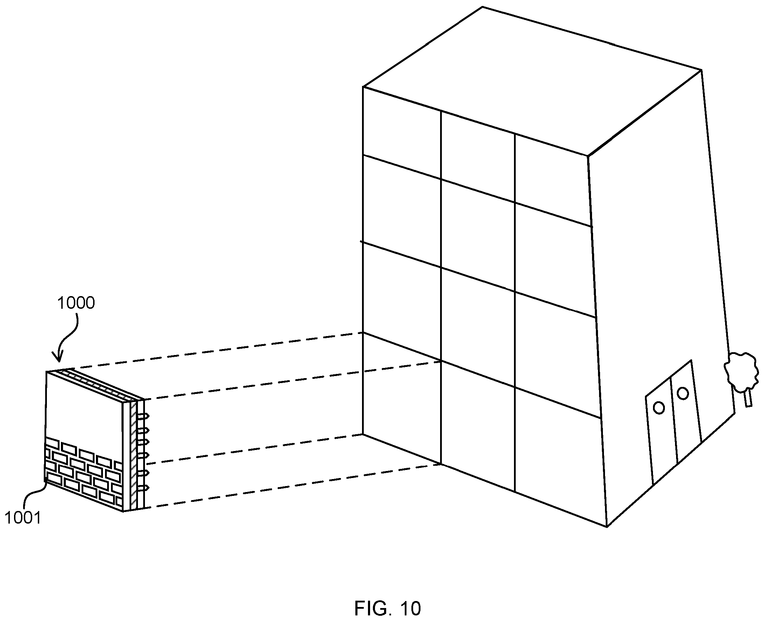

FIG 10 shows an example of a layered component 1000 for a panel of a module for a building comprising a plurality of modules. In this example, the outer layer 1001 of the panel comprises brick slips.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

## Claims

1. A layered component (200; 300; 400; 500; 600) for automated manufacture of a panel of a module for a building comprising a plurality of modules, the layered component (200; 300; 400; 500; 600) comprising:
a substrate (205) arranged to be mounted on a supporting structure (206) of a module of the building;
an outer layer (201) comprising one or more finishes;
an adhesive layer (203, 207) disposed between the substrate (205) and the outer layer (201) and holding the substrate (205) and the outer layer (201) together;
a first bond region (204) between the adhesive layer (207) and the substrate (205);
a second bond region (202) between the adhesive layer (203) and the outer layer (201);
a mesh (208) disposed within the adhesive layer (203, 207); and
an attaching assembly passing through the mesh and arranged to mechanically secure the layered component to the supporting structure, the attaching assembly configured such that in use any brittle failure of the bond regions occurs in the first bond region prior to the second bond region, wherein the attaching assembly comprises:
a fastening means (209) which comprises a head (210) engageable with the mesh (208) and an elongated portion which extends from the head, such that in use the head (210) is disposed within the adhesive layer (203, 207) and anchors the mesh (208) on one side of the mesh and the elongated portion extends through the substrate (205) to engage with the supporting structure (206) so that the fastening means (209) anchors the layered component (200; 300; 400; 500; 600) to the supporting structure (206); and
a spacer (312) so that, in use, the mesh (208) is placed in a predetermined position within the adhesive layer (203, 207) and the spacer (312) is arranged to enable the fastening means (209) to be tightened, clamping the substrate (205) to the supporting structure (206) whilst the adhesive layer (203, 207) is in an uncured state.

2. The layered component as claimed in claim 1, wherein the attaching assembly is ductile, and the mesh is ductile.

3. The layered component as claimed in claim 1 or claim 2, wherein the attaching assembly comprises:
a washer engageable with the mesh and the fastening means such that in use the washer is placed between the head of the fastening means and the mesh to distribute force applied by the attaching assembly and to engage wider region of the mesh,
wherein the washer has a diameter which is greater than a diameter of one or more of holes formed in the mesh, and optionally the washer is shaped to prevent air being trapped underneath the washer.

4. The layered component as claimed in claim 3, wherein the spacer is integral to the washer or the fastening means.

5. The layered component as claimed in claim 3, wherein the spacer and the washer are integral to the fastening means.

6. The layered component as claimed in claims 3 to 5, wherein the washer comprises one or more holes to facilitate distribution of adhesive of the adhesive layer and to facilitate air to escape providing a greater continuity of the adhesive layer.

7. The layered component as claimed in any one of the preceding claims, wherein the mesh is disposed at a predetermined distance away from a surface of the substrate and embedded within the adhesive layer.

8. The layered component as claimed in any one of the preceding claims, comprising a load bearer which is arranged to be disposed between the substrate and the supporting structure such that when in use the fastening means extends through the substrate to the load bearer.

9. A composite panel comprising the layered component as claimed in any one of the preceding claims.

10. A method (800) of manufacturing a layered component, comprising:
placing (870) a substrate on a supporting structure;
applying (871) a first adhesive layer on the substrate in a substantially uniform thickness and providing a first bond region between the first adhesive layer and the substrate;
placing (872) a mesh on the first adhesive layer;
mechanically securing (873) the mesh to the supporting structure by inserting an attaching assembly through the mesh, the first adhesive layer and the substrate into the supporting structure, wherein the attaching assembly comprises:
a fastening means which comprises a head engageable with the mesh and an elongated portion which extends from the head, such that in use the head is disposed within the adhesive layer and anchors the mesh on one side of the mesh and the elongated portion extends through the substrate to engage with the supporting structure so that the fastening means anchors the layered component to the supporting structure; and
a spacer so that, in use, the mesh is placed in a predetermined position within the adhesive layer and the spacer is arranged to enable the fastening means to be tightened, clamping the substrate to the supporting structure whilst the adhesive layer is in an uncured state;
applying (874) a second adhesive layer in a substantially uniform thickness to the mesh and providing a second bond region between the second adhesive layer and an outer layer; and
placing (875) one or more finishes on the second adhesive layer to form the outer layer,
wherein the attaching assembly is configured such that in use any brittle failure of the bond regions occurs in the first bond region prior to the second bond region.

11. The method as claimed in claim 10, wherein when inserting the attaching assembly, the method further comprising pulling the mesh, by the attaching assembly, towards the supporting structure before the adhesive starts to harden.

12. The method as claimed in claim 10 or claim 11, wherein the finishes comprise one or more discrete elements and placing the one or more discrete elements on the second adhesive layer comprising:
determining a feature of one or more of the discrete elements, wherein the feature comprises at least one of: a dimension, a colour, a shape or a design of the one or more discrete elements;
storing the one or more of the discrete elements in batches according to the determined feature;
assigning an edge of the one or more of the discrete elements as a datum such that it determines the orientation of the one or more of the discrete elements;
placing the one or more of the discrete elements such that the datum edge is positioned according to a design intent.

13. The method as claimed in claim 12, wherein the placing the one or more discrete elements on the second adhesive layer comprising:
pushing the one or more of the discrete elements into an adhesive such that outer surfaces of the one or more of the discrete elements are arranged to lie substantially in plane with the surface of the other discrete elements forming the outer layer.

14. The method as claimed in claim 12 or claim 13, wherein the datum edge of the one or more of the discrete elements are aligned in substantially a straight line.

15. The method as claimed in any one of claims 12 to 14, wherein the datum edge of a first discrete element is positioned to create a substantially straight line with a second discrete element, such that:
if the first discrete element has the datum edge that is concave then the straight line is defined by connecting points substantially 10% of the length of the datum edge in from each end of the first discrete element and the second discrete element; and
if the first discrete element has the datum edge that is convex then the straight line is defined by a mid-side tangent line of the first discrete element and the second discrete element.

## Patentansprüche

1. Geschichtete Komponente (200; 300; 400; 500; 600) zur automatisierten Fertigung einer Platte eines Moduls für ein Gebäude, umfassend eine Vielzahl von Modulen, wobei die geschichtete Komponente (200; 300; 400; 500; 600) Folgendes umfasst:
ein Substrat (205), das dazu ausgelegt ist, an einer Stützstruktur (206) eines Moduls des Gebäudes montiert zu werden;
eine äußere Schicht (201), die eine oder mehrere Lackierungen umfasst;
eine Klebschicht (203, 207), die zwischen dem Substrat (205) und der äußeren Schicht (201) angeordnet ist und das Substrat (205) und die äußere Schicht (201) zusammenhält;
einen ersten Verbindungsbereich (204) zwischen der Klebschicht (207) und dem Substrat (205);
einen zweiten Verbindungsbereich (202) zwischen der Klebschicht (203) und der äußeren Schicht (201);
ein Netz (208), das innerhalb der Klebschicht (203, 207) angeordnet ist; und
eine Anbringungsbaugruppe, die durch das Netz verläuft und dazu ausgelegt ist, die geschichtete Komponente mechanisch an der Stützstruktur zu sichern, wobei die Anbringungsbaugruppe derart konfiguriert ist, dass jeder Sprödbruch der Verbindungsbereiche im Gebrauch in dem ersten Verbindungsbereich vor dem zweiten Verbindungsbereich auftritt, wobei die Anbringungsbaugruppe Folgendes umfasst:
ein Befestigungsmittel (209), das einen Kopf (210), der mit dem Netz (208) in Eingriff bringbar ist, und einen länglichen Abschnitt, der sich von dem Kopf erstreckt, umfasst, sodass der Kopf (210) im Gebrauch innerhalb der Klebschicht (203, 207) angeordnet ist und das Netz (208) an einer Seite des Netzes verankert, und sich der längliche Abschnitt durch das Substrat (205) erstreckt, um in die Stützstruktur (206) einzugreifen, sodass das Befestigungsmittel (209) die geschichtete Komponente (200; 300; 400; 500; 600) an der Stützstruktur (206) verankert; und
einen Abstandhalter (312), sodass das Netz (208) im Gebrauch in einer vorbestimmten Position innerhalb der Klebschicht (203, 207) platziert ist und der Abstandhalter (312) dazu ausgelegt ist, zu ermöglichen, dass das Befestigungsmittel (209) festgezogen wird, wobei das Substrat (205) an die Stützstruktur (206) geklemmt wird, während sich die Klebschicht (203, 207) in einem ungehärteten Zustand befindet.

2. Geschichtete Komponente nach Anspruch 1, wobei die Anbringungsbaugruppe dehnbar ist und das Netz dehnbar ist.

3. Geschichtete Komponente nach Anspruch 1 oder Anspruch 2, wobei die Anbringungsbaugruppe Folgendes umfasst:
eine Unterlegscheibe, die mit dem Netz und dem Befestigungsmittel in Eingriff bringbar ist, sodass die Unterlegscheibe im Gebrauch zwischen dem Kopf des Befestigungsmittels und dem Netz platziert ist, um Kraft, die durch die Anbringungsbaugruppe ausgeübt wird, zu verteilen und einen breiten Bereich des Netzes in Eingriff zu bringen,
wobei die Unterlegscheibe einen Durchmesser aufweist, der größer ist als ein Durchmesser eines oder mehrerer Löcher, die in dem Netz gebildet sind, und die Unterlegscheibe gegebenenfalls geformt ist, um zu verhindern, dass Luft unter der Unterlegscheibe eingeschlossen wird.

4. Geschichtete Komponente nach Anspruch 3, wobei der Abstandhalter einstückig mit der Unterlegscheibe oder dem Befestigungsmittel ist.

5. Geschichtete Komponente nach Anspruch 3, wobei der Abstandhalter und die Unterlegscheibe einstückig mit dem Befestigungsmittel sind.

6. Geschichtete Komponente nach einem der Ansprüche 3 bis 5, wobei die Unterlegscheibe ein oder mehrere Löcher umfasst, um die Verteilung von Klebstoff der Klebschicht zu erleichtern und ein Entweichen von Luft zu erleichtern, wodurch eine größere Kontinuität der Klebschicht bereitgestellt wird.

7. Geschichtete Komponente nach einem der vorhergehenden Ansprüche, wobei das Netz in einem vorbestimmten Abstand von einer Oberfläche des Substrats entfernt angeordnet ist und innerhalb der Klebschicht eingebettet ist.

8. Geschichtete Komponente nach einem der vorhergehenden Ansprüche, umfassend einen Lastträger, der dazu ausgelegt ist, zwischen dem Substrat und der Stützstruktur angeordnet zu sein, sodass sich das Befestigungsmittel im Gebrauch durch das Substrat zu dem Lastträger erstreckt.

9. Verbundplatte, umfassend die geschichtete Komponente nach einem der vorhergehenden Ansprüche.

10. Verfahren (800) zum Herstellen einer geschichteten Komponente, umfassend:
Platzieren (870) eines Substrats auf einer Stützstruktur;
Auftragen (871) einer ersten Klebschicht auf das Substrat in einer im Wesentlichen gleichmäßigen Dicke und Bereitstellen eines ersten Verbindungsbereichs zwischen der ersten Klebschicht und dem Substrat;
Platzieren (872) eines Netzes auf der ersten Klebschicht;
mechanisches Sichern (873) des Netzes an der Stützstruktur durch Einsetzen einer Anbringungsbaugruppe durch das Netz, die erste Klebschicht und das Substrat in die Stützstruktur, wobei die Anbringungsbaugruppe Folgendes umfasst:
ein Befestigungsmittel, das einen Kopf, der mit dem Netz in Eingriff bringbar ist, und einen länglichen Abschnitt, der sich von dem Kopf erstreckt, umfasst, sodass der Kopf im Gebrauch innerhalb der Klebschicht angeordnet ist und das Netz an einer Seite des Netzes verankert, und sich der längliche Abschnitt durch das Substrat erstreckt, um in die Stützstruktur einzugreifen, sodass das Befestigungsmittel die geschichtete Komponente an der Stützstruktur verankert; und
einen Abstandhalter, sodass das Netz im Gebrauch in einer vorbestimmten Position innerhalb der Klebschicht platziert ist und der Abstandhalter dazu ausgelegt ist, zu ermöglichen, dass das Befestigungsmittel festgezogen wird, wobei das Substrat an die Stützstruktur geklemmt wird, während sich die Klebschicht in einem ungehärteten Zustand befindet;
Auftragen (874) einer zweiten Klebschicht in einer im Wesentlichen gleichmäßigen Dicke auf das Netz und Bereitstellen eines zweiten Verbindungsbereichs zwischen der zweiten Klebschicht und einer äußeren Schicht; und
Platzieren (875) eines oder mehrerer Lacke auf der zweiten Klebschicht, um die äußere Schicht zu bilden,
wobei die Anbringungsbaugruppe derart konfiguriert ist, dass jeder Sprödbruch der Verbindungsbereiche im Gebrauch in dem ersten Verbindungsbereich vor dem zweiten Verbindungsbereich auftritt.

11. Verfahren nach Anspruch 10, wobei beim Einsetzen der Anbringungsbaugruppe das Verfahren ferner Ziehen des Netzes durch die Anbringungsbaugruppe zur Stützstruktur, bevor der Klebstoff zu härten beginnt, umfasst.

12. Verfahren nach Anspruch 10 oder Anspruch 11, wobei die Lacke ein oder mehrere einzelne Elemente umfassen und das Platzieren des einen oder der mehreren einzelnen Elemente auf der zweiten Klebschicht Folgendes umfasst:
Bestimmen eines Merkmals von einem oder mehreren der einzelnen Elemente, wobei das Merkmal mindestens eines von Folgendem umfasst: einer Abmessung, einer Farbe, einer Form oder einem Design des einen oder der mehreren einzelnen Elemente;
Lagern des einen oder der mehreren einzelnen Elemente in Chargen gemäß dem bestimmten Merkmal;
Zuweisen einer Kante des einen oder der mehreren der einzelnen Elemente als Bezugspunkt, sodass sie die Ausrichtung des einen oder der mehreren der einzelnen Elemente bestimmt;
Platzieren des einen oder der mehreren der einzelnen Elemente, sodass eine Bezugspunktkante gemäß einer Entwurfsabsicht positioniert ist.

13. Verfahren nach Anspruch 12, wobei das Platzieren des einen oder der mehreren einzelnen Elemente auf der zweiten Klebschicht Folgendes umfasst:
Drücken des einen oder der mehreren der einzelnen Elemente in einen Klebstoff, sodass äußere Flächen des einen oder der mehreren der einzelnen Elemente dazu ausgelegt sind, im Wesentlichen bündig mit der Fläche der anderen einzelnen Elemente, die die äußere Schicht bilden, zu liegen.

14. Verfahren nach Anspruch 12 oder Anspruch 13, wobei die Bezugspunktkante des einen oder der mehreren der einzelnen Elemente in einer im Wesentlichen geraden Linie ausgerichtet sind.

15. Verfahren nach einem der Ansprüche 12 bis 14, wobei die Bezugspunktkante eines ersten einzelnen Elements positioniert ist, um eine im Wesentlichen gerade Linie mit einem zweiten einzelnen Element zu bilden, sodass:
wenn das erste einzelne Element die Bezugspunktkante aufweist, die konkav ist, die gerade Linie durch Verbindungspunkte mit im Wesentlichen 10 % der Länge der Bezugspunktkante von jedem Ende des ersten einzelnen Elements und des zweiten einzelnen Elements definiert ist; und
wenn das erste einzelne Element die Bezugspunktkante aufweist, die konvex ist, die gerade Linie durch eine Mitte-Seite-Tangente des ersten einzelnen Elements und des zweiten einzelnen Elements definiert ist.

## Revendications

1. Composant stratifié (200 ; 300 ; 400 ; 500 ; 600) pour la fabrication automatisée d'un panneau d'un module pour un bâtiment comprenant une pluralité de modules, le composant stratifié (200 ; 300 ; 400 ; 500 ; 600) comprenant :
un substrat (205) agencé pour être monté sur une structure de support (206) d'un module du bâtiment ;
une couche externe (201) comprenant une ou plusieurs finitions ;
une couche adhésive (203, 207) disposée entre le substrat (205) et la couche externe (201) et maintenant le substrat (205) et la couche externe (201) ensemble ;
une première région de liaison (204) entre la couche adhésive (207) et le substrat (205) ;
une seconde région de liaison (202) entre la couche adhésive (203) et la couche externe (201) ;
un maillage (208) disposé à l'intérieur de la couche adhésive (203, 207) ; et
un ensemble de fixation traversant le maillage et agencé pour fixer mécaniquement le composant stratifié à la structure de support, l'ensemble de fixation étant configuré de telle sorte qu'en utilisation, toute rupture fragile des régions de liaison se produise dans la première région de liaison avant la seconde région de liaison, l'ensemble de fixation comprenant :
un moyen de fixation (209) qui comprend une tête (210) pouvant s'engager avec le maillage (208) et une partie allongée qui s'étend à partir de la tête, de sorte que, lors de l'utilisation, la tête (210) est disposée dans la couche adhésive (203, 207) et ancre le maillage (208) sur un côté du maillage et la partie allongée s'étend à travers le substrat (205) pour s'engager avec la structure de support (206) de sorte que le moyen de fixation (209) ancre le composant stratifié (200 ; 300 ; 400 ; 500 ; 600) à la structure de support (206) ; et
une entretoise (312) de sorte que, lors de l'utilisation, le maillage (208) est placé dans une position prédéterminée à l'intérieur de la couche adhésive (203, 207) et l'entretoise (312) est agencée pour permettre au moyen de fixation (209) d'être serré, serrant le substrat (205) sur la structure de support (206) tandis que la couche adhésive (203, 207) est dans un état non durci.

2. Composant stratifié selon la revendication 1, dans lequel l'ensemble de fixation est ductile et le maillage est ductile.

3. Composant stratifié selon la revendication 1 ou la revendication 2, dans lequel l'ensemble de fixation comprend :
une rondelle pouvant s'engager avec le maillage et le moyen de fixation de telle sorte que, lors de l'utilisation, la rondelle soit placée entre la tête du moyen de fixation et le maillage pour répartir la force appliquée par l'ensemble de fixation et pour s'engager dans une région plus large du maillage,
dans lequel la rondelle a un diamètre qui est supérieur à un diamètre d'un ou plusieurs trous formés dans le maillage, et éventuellement la rondelle est formée pour empêcher l'air d'être emprisonné sous la rondelle.

4. Composant stratifié selon la revendication 3, dans lequel l'entretoise est solidaire de la rondelle ou du moyen de fixation.

5. Composant stratifié selon la revendication 3, dans lequel l'entretoise et la rondelle font partie intégrante du moyen de fixation.

6. Composant stratifié selon les revendications 3 à 5, dans lequel la rondelle comprend un ou plusieurs trous pour faciliter la distribution de l'adhésif de la couche adhésive et pour faciliter l'échappement de l'air, offrant une plus grande continuité de la couche adhésive.

7. Composant stratifié selon l'une quelconque des revendications précédentes, dans lequel le maillage est disposé à une distance prédéterminée d'une surface du substrat et intégré dans la couche adhésive.

8. Composant stratifié selon l'une quelconque des revendications précédentes, comprenant un support de charge qui est agencé pour être disposé entre le substrat et la structure de support de telle sorte que, lors de l'utilisation, le moyen de fixation s'étend à travers le substrat jusqu'au support de charge.

9. Panneau composite comprenant le composant stratifié selon l'une quelconque des revendications précédentes.

10. Procédé (800) de fabrication d'un composant stratifié, comprenant :
le placement (870) d'un substrat sur une structure de support ;
l'application (871) d'une première couche adhésive sur le substrat selon une épaisseur sensiblement uniforme et la fourniture d'une première région de liaison entre la première couche adhésive et le substrat ;
le placement (872) d'un maillage sur la première couche adhésive ;
la fixation mécanique (873) du maillage à la structure de support en insérant un ensemble de fixation à travers le maillage, la première couche adhésive et le substrat dans la structure de support, l'ensemble de fixation comprenant :
un moyen de fixation qui comprend une tête pouvant s'engager avec le maillage et une partie allongée qui s'étend à partir de la tête, de telle sorte que, lors de l'utilisation, la tête est disposée à l'intérieur de la couche adhésive et ancre le maillage sur un côté du maillage et la partie allongée s'étend à travers le substrat pour s'engager avec la structure de support de sorte que le moyen de fixation ancre le composant stratifié à la structure de support ; et
une entretoise de sorte que, lors de l'utilisation, le maillage soit placé dans une position prédéterminée à l'intérieur de la couche adhésive et l'entretoise est agencée pour permettre de serrer le moyen de fixation, serrant le substrat sur la structure de support tandis que la couche adhésive est dans un état non durci ;
l'application (874) d'une seconde couche adhésive d'épaisseur sensiblement uniforme sur le maillage et la fourniture d'une seconde région de liaison entre la seconde couche adhésive et une couche externe ; et
le placement (875) d'une ou plusieurs finitions sur la seconde couche adhésive pour former la couche externe,
dans lequel l'ensemble de fixation est configuré de telle sorte que, lors de l'utilisation, toute rupture fragile des régions de liaison se produise dans la première région de liaison avant la seconde région de liaison.

11. Procédé selon la revendication 10, dans lequel, lors de l'insertion de l'ensemble de fixation, le procédé comprend en outre la traction du maillage, par l'ensemble de fixation, vers la structure de support avant que l'adhésif ne commence à durcir.

12. Procédé selon la revendication 10 ou la revendication 11, dans lequel les finitions comprennent un ou plusieurs éléments discrets et le placement des un ou plusieurs éléments discrets sur la seconde couche adhésive comprenant :
la détermination d'une caractéristique d'un ou plusieurs des éléments discrets, la caractéristique comprenant au moins l'un des éléments suivants : une dimension, une couleur, une forme ou un dessin des un ou plusieurs éléments discrets ;
le stockage des un ou plusieurs des éléments discrets par lots en fonction de la caractéristique déterminée ;
l'attribution d'une arête des un ou plusieurs des éléments discrets en tant que donnée de telle sorte qu'elle détermine l'orientation des un ou plusieurs des éléments discrets ;
le placement des un ou plusieurs des éléments discrets de telle sorte que le bord de référence soit positionné selon une intention de conception.

13. Procédé selon la revendication 12, dans lequel le placement des un ou plusieurs des éléments discrets sur la seconde couche adhésive comprend :
la poussée des un ou plusieurs des éléments discrets dans un adhésif de telle sorte que les surfaces externes des un ou plusieurs des éléments discrets soient disposées pour se trouver sensiblement dans le plan avec la surface des autres éléments discrets formant la couche externe.

14. Procédé selon la revendication 12 ou la revendication 13, dans lequel le bord de référence des un ou plusieurs des éléments discrets est aligné sensiblement sur une ligne droite.

15. Procédé selon l'une quelconque des revendications 12 à 14, dans lequel le bord de référence d'un premier élément discret est positionné de manière à créer une ligne sensiblement droite avec un second élément discret, de telle sorte que :
si le premier élément discret a le bord de référence qui est concave, alors la ligne droite est définie en reliant des points situés sensiblement à 10 % de la longueur du bord de référence à partir de chaque extrémité du premier élément discret et du second élément discret ; et
si le premier élément discret a un bord de référence qui est convexe, alors la ligne droite est définie par une ligne tangente au milieu du premier élément discret et du second élément discret.
